# EUROPEAN PATENT SPECIFICATION

(11) **EP 3 498 550 B1**
(45) Date of publication and mention of the grant of the patent: **17.02.2021**
(21) Application number: 17206866.0
(22) Date of filing: 13.12.2017
(51) Int. Cl.: B60T 13/38, B60T 17/08

(54) **SPRING PORTION OF A SPRING BRAKE ACTUATOR, SPRING BRAKE ACTUATOR AND VEHICLE HAVING THE SAME**
FEDERABSCHNITT EINES FEDERSPEICHERBREMSAKTUATORS, FEDERSPEICHERBREMSAKTUATOR UND FAHRZEUG DAMIT
PARTIE DE RESSORT D'UN ACTIONNEUR DE FREIN À RESSORT, ACTIONNEUR DE FREIN À RESSORT ET VÉHICULE LE COMPORTANT

(43) Date of publication of application: 19.06.2019
(73) Proprietor: WABCO Europe BVBA, 1170 Brussels (BE)
(72) Inventor: Zbylut, Michal, 42-400 Zawiercie (PL)
(74) Representative: Copi, Joachim

(56) References cited:
- EP-A1- 0 016 566
- DE-B1- 2 646 158
- US-A- 4 080 875
- US-A- 4 480 531

## Description

The invention relates to a spring portion of a spring brake actuator, in particular parking or emergency spring brake actuator, for use in a commercial vehicle, said spring portion being configured to be coupled to a service brake portion of the spring brake actuator. The invention further relates to a spring brake actuator, in particular parking or emergency spring brake actuator for use in a commercial vehicle, having a spring portion, a service portion that is coupled to the spring portion and comprises a push rod that is movably mounted in the service portion and configured to be coupled to a brake caliper of the commercial vehicle. The invention further relates to a vehicle, in particular commercial vehicle, having at least one wheel, at least one spring brake actuator to generate a braking force and at least one brake caliper configured to apply the braking force generated by the spring brake actuator to the wheel.

Spring brake actuators of the aforementioned type are widely used in the commercial vehicle industry in particular to provide the service braking function, emergency and park braking function to the vehicle's braking system. In spring brake actuators, the entire actuator can be understood as a combination of a service portion which is configured to accomplish the service braking function and a spring portion which provides the emergency and parking brake functionality. In the spring portion, a very strong compression spring is typically used to provide and generate the necessary braking force for emergency braking and parking brake function. In normal operation, the compression spring is held in a compressed state by applying a positive pressure in a corresponding pressure chamber of the spring brake actuator, thus holding a spring brake piston in its so-called release position. If the pressure in said pressure chamber drops, either by deliberately venting the pressure chamber (and as by actuating a hand brake valve) or due to a malfunction in the pressure supply system the ensuing drop in pressure allows the compression spring to overcome the residual pressure in the pressure chamber, allowing the spring force to be transmitted via the spring brake piston to a push rod of the service portion which in turn transfers the braking force to a brake caliper of the vehicle.

After actuating the compression spring, the spring brake actuator and compression spring can normally be brought into the release position by pressurizing the corresponding pressure chamber again, thus overcoming the resilient force of the compression spring and moving it back into its compressed state.

For safety reasons, every brake actuator that is equipped with an aforementioned compression spring typically requires a mechanical release system which allows for releasing the brake/parking brake on the wheel in case of pneumatic circuit failure, e. g. air leakage, in order to be able to move the vehicle.

Such prior art is known from DE 26 46158 B1. DE 26 46158 B1 shows a rapidly releasable spring type pressure accumulator wherein the parking brake of rapid accumulator dissociable spring system, and the pressure medium is subjected to the action of the compression spring and piston and piston rod of the piston and the piston rod, and to each other, in this case seals lock the release or release the piece of the ball-type I via a needle-releasable device is provided in one of the type, the release of the locking piece ball type device cooperating with the outer periphery in a tangential direction of the compression spring sequentially, and perpendicular to the direction of action of force, ball type, ball locking device and the lock of the release position to the locking position, the reservoir of the corresponding stopper surface.

In Addition the document US 4 080 875 A shows a vehicle braking means in which an auxiliary chamber comprises a locking mechanism whose function is to lock together a piston and a piston rod. The locking mechanism comprises a spring-loaded guide and locking elements arranged to constantly contact the guide and to engage the piston. To release the vehicle brakes, provision is made of a rod or a pushrod extending from the auxiliary chamber. As compared with the constructions known currently, the auxiliary chamber is more readily operable and convenient in use.

In known prior art systems, release bolts having helical threads have been used. By rotating these release bolts in correspondingly provided stationary threads on the brake actuator housing, the spring brake piston would be moved back into its release position against the force of the compression spring. A commonly experienced challenge with these prior art systems is the high torque required for moving the release bolt in addition to the wear that is inevitably subjected to the threaded portions. Another general disadvantage is the space requirement in the longitudinal direction of the release bolt which extends beyond the housing when being operated.

Accordingly, it was an object of the invention to provide an improved spring portion of the spring brake actuator, spring brake actuator and vehicle having such a spring brake actuator that overcome the aforementioned deficiencies as much as possible. In particular, it was an object of the invention to provide an improved spring portion with improved ease of operation and reduced space consumption. In the least, it was an object of the invention to provide an alternative spring portion, spring brake actuator and vehicle.

The invention attains its object by suggesting a spring portion of a spring brake actuator with the features of claim 1. In particular, the invention suggests a spring portion of a spring brake actuator, in particular parking or emergency spring brake actuator, for use in a commercial vehicle, said spring portion being configured to be coupled to a service brake portion of the spring brake actuator, and comprising a spring brake piston configured to move between a release position and a braking position; a compression spring that is operatively coupled to the spring brake piston and effective to push the spring brake piston towards the braking position, generating a braking force; the spring brake piston comprising a piston pipe that is configured to transfer the braking force to the service brake portion; a coupling that is interposed between the piston pipe and the spring brake piston and configured to move between a locking state and a release state, couple the piston pipe to the spring brake piston when in the locking state, and uncouple the piston pipe and the spring brake piston when in the release state; further comprising a rotatable release rod that is operatively coupled to the coupling such that a rotation of the release rod causes the coupling to move between the locking state and the release state. Herein, the spring brake piston is preferably slidably mounted in a cylinder housing of the spring portion. The coupling is preferably slidably mounted into the spring portion. The term "coupling" is understood to mean coupling the piston pipe to the spring brake piston in the locking state such that force transmission between the piston pipe and the spring brake piston is enabled, and such that force transmission in between the piston pipe and the spring brake piston is interrupted when in the release state. Preferably, the release rod is rotatably mounted to the spring portion, in particular axially fixed such that it is only rotatably movable, but not axially displaceable.

The invention is based upon the realization that by providing a coupling that is operable in rotational fashion and configured to interrupt force transmission between the spring brake piston, i. e. ultimately the compression spring and the piston pipe which is responsible for transmitting the compression spring force to the service portion of the brake actuator, only minimal axial space, i. e. in the longitudinal direction of the actuator, is consumed for providing the required mechanical release function to the spring brake actuator. The rotational operation allows for identical dimensions of the spring brake actuator regardless of whether or not the release system is operated or not. Furthermore, the interruption of force transmission between the piston pipe and the rest of the spring brake piston provides an immediate way of allowing independent movement of the piston pipe with respect to the compression spring. This means that a movement of the piston pipe, and consequently also of the push rod of the service portion, back towards the release position is possible without having to overcome the massive resistance presented by the compression spring of the spring portion.

According to the invention, the coupling comprises a number of locking elements that are radially movably mounted inside the spring portion and configured to positively locked the piston pipe and the spring brake piston when in the locking state. In this, "a number" is understood to be indicative of one or more locking elements. The locking elements are optionally exclusively radially movable, but in alternative embodiments may also be angled towards the circumference of the piston pipe. Term "radially movable" is understood to mean that the movement of the locking elements has at least a radial component. By having the locking elements move radially and in particular not axially, the space requirement for the release mechanism is further reduced, leading to a more compact design of the spring brake actuator as a whole.

In a preferred embodiment, the coupling comprises a cam disc that is mounted to the release rod and slidingly engages the locking elements such that the locking elements extend radially further outwards in the locking state than in the release state. By providing the sliding engagement between the cam disc and the locking elements, the coupling can exert its coupling and uncoupling function with a minimal amount of interacting parts which contributes to a ware-resistant design.

In a further preferred embodiment the cam disc comprises for each locking element a recess into which the respective locking elements extends each recess extending in a circumferential direction of the cam disc, having a contour that is configured to slidingly displace the locking elements radially outwards when the release rod is rotated from the release state towards the locking state.

Preferably, each recess defines a first ratchet position and a second ratchet position which allow a locking in place of the locking elements. The ratchet positions are preferably in opposing end portions of each recess and are configured to prevent the cam disc from inadvertently rotating, and thus from inadvertently moving the locking elements.

In a further preferred embodiment, the coupling comprises at least one elastically deformable member that is operatively coupled to the cam disc and effective to bias the cam disc towards locking position. Preferably, the elastically deformable member is a torsion spring configured to apply torque to the cam disc, effective to rotate the cam disc towards to the locking state.

In a further preferred embodiment, the release rod and the cam disc are located inside the piston pipe, the piston pipe comprises for each locking element a passage opening, and the locking elements are configured to slidingly move in the passage opening for locking the spring brake piston in the locking state, and unlocking the spring brake piston in the release state. Preferably, the passage opening and corresponding locking element have mating geometries and as little clearance as possible such that canting of the locking elements is prevented while still enabling a low friction movement of the locking elements through the passage openings.

Further part of the invention is, that the spring brake piston comprises a sleeve that is configured to slidably engage the piston pipe, wherein the sleeve comprises at least one
recess that is configured to receive the locking elements in the locking state. Preferably, the slidable engagement between the sleeve and the piston pipe is formed as a fitting with a transition fit with as little tolerance as technical feasible to allow for a low friction movement while preventing canting of the piston pipe relative to the sleeve. Preferably, one or more sealing elements are provided to seal off any residual gap in between the piston pipe and the sleeve of the spring brake piston. The at least one recess preferably has a gap that is sufficient to provide for a positive fit between the locking elements and the sleeve for enabling force transmission when the coupling is in the locking state.

Preferably, the at least one recess in the sleeve has a contour that is configured to slidingly displace the locking elements radially inwards when the release rod is rotated from the locking state towards the release state and the compression spring pushes the spring brake piston towards the braking position. Preferably, the locking elements and the at least one recess in the sleeve have a contact angle that is non parallel to the direction of movement of the spring brake piston. This can preferably be done by providing the locking elements and recess with wedge-shaped surface portions, spherical surface portions, or otherwise convex/concave surface portions.

A particularly economical embodiment features exactly one recess which extends circumferentially around the sleeve and into which all locking elements of the coupling extend in the locking state.

Alternatively, the sleeve may comprise one recess for each locking element.

According the invention, the coupling comprises a support ring that is slidably mounted on the piston pipe adjacent to the sleeve, and an elastically deformable member that is operatively coupled to the support ring and effective to bias the support ring towards the sleeve. The operative coupling between the support ring and the piston pipe is preferably such that when the release rod is rotated from the locking state towards the release state and the compression spring pushes the spring brake piston towards the braking position, the supportring slides over the passage openings and prevents the locking elements from dropping out of the passage openings. Particularly preferred, the elastically deformable member is in its relaxed state when the support ring is positioned over the passage openings of the piston pipe such that the passage openings are at least partially, and preferably completely obstructed by the support ring. In this embodiment, the elastically deformable member ensures that the support ring remains in its obstructing position reliably when the piston pipe and sleeve of the spring brake piston are moved independently of one another.

In alternatively preferred embodiments, the support ring is provided with one or more stoppers that are operatively coupled to the supporting ring such that the supporting ring is positioned at a predetermined position in the obstructing position.

According to a further preferred embodiment, the number of locking elements is at least two, and an angle of rotation of the release rod between the locking state and the release state is less than 180°. Preferably, the number of locking elements is at least three and the angle of rotation is less than 120°, particularly preferred less than 90°.

Preferably, the locking elements are formed as balls, pins, wedges or a mixture thereof. For example, the locking elements may be formed as pins having convex, e. g. spherical, or wedgelike end portions.

In a further preferred embodiment, the release rod comprises a torque-transmitting portion, in particular polygonally shaped portion, and the cam disc comprises a matingly shaped recess into which the polygonally shaped portion of the release rod extends. Alternatively, the release rod comprises an oblong or otherwise non-circularly shaped portion configured to transfer torque and optionally allow for relative axial movement between the cam disc and the release rod. This type of coupling between the cam disc and the release rod ensures a reliable positive fit for torque transmission and is at the same time comparatively easy to manufacture. It is also highly wear-resistant.

The invention has herein above been described according to a first aspect with respect to the spring portion of the spring brake actuator. The invention, in a second aspect, also relates to a spring brake actuator of the initially mentioned type. The invention also attains the aforementioned objects by suggesting a spring brake actuator having a spring portion that is formed according to one the above-described preferred embodiments.

The spring brake actuator has the same benefits and preferred embodiments as the spring portion described hereinabove.
In a further aspect, the invention relates to a vehicle of the initially mentioned type. The invention attains its object by suggesting a vehicle of the initially mentioned type having a spring brake actuator that is formed according to any of the above-mentioned preferred embodiments. Also the vehicle shares the advantages and preferred embodiments with the spring brake actuator and spring portion according to the invention.

For a more complete understanding of the invention, the invention will now be described in more detail with reference to the accompanying drawings. The detailed description will illustrate and describe or is considered as a preferred embodiment of the invention. It should of course be understood that various modifications and changes in form or detail could readily be made without departing from the scope of the invention. It is therefore intended that the invention may not be limited to the exact form and detail shown and described herein, nor to anything less than the whole of the invention disclosed herein and disclaimed hereinafter. Further, the features described in the description, the drawings and the claims disclosing the invention may be essential for the invention considered alone or in combination. In particular, any reference signs in the claims shall not be construed as limiting the scope of the invention. The word "comprising" does not exclude other elements or steps. The wording "a" or "an" does not exclude a plurality.

In brief, the figures to which reference will be made show:
- Fig. 1: shows a schematic three dimensional view of a spring portion of a spring brake actuator according to preferred embodiment,
- Figs. 2a, b: show cross sectional detail views of a coupling of the spring portion of Fig. 1,
- Figs. 3a - c: show a longitudinal cross sectional view of the spring portion of Figs. 1 and 2a, b in different states.

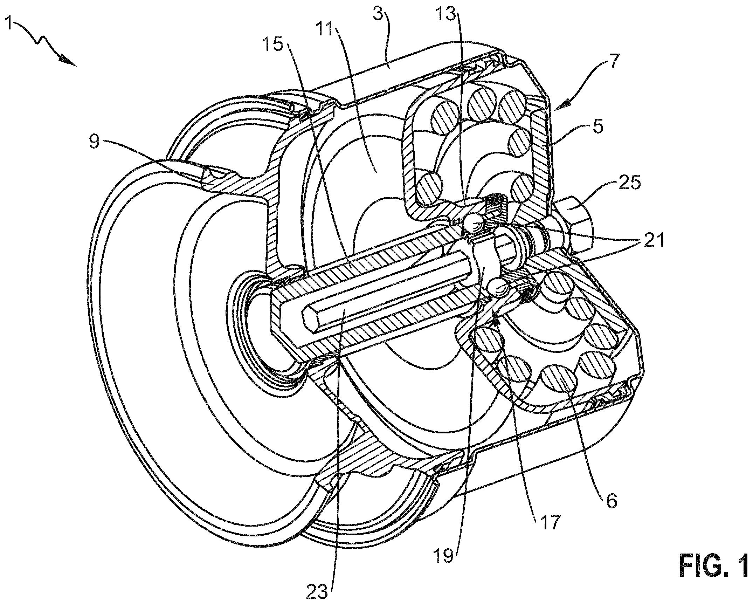

Fig. 1 depicts a spring portion 1 of a spring brake actuator for a commercial vehicle. The spring portion 1 comprises a cylinder housing 3 and a spring seat 5 which acts as a reinforcement for holding a compression spring 6 that is located inside the spring portion 1. The spring seat 5 is mounted to a housing base 7.

The spring portion 1 comprises a coupling flange 9 for connection to a service portion (not shown) of the spring brake actuator. Inside the cylinder housing 3, a spring brake piston 11 is slidably mounted. The spring brake piston 11 comprises a sleeve 13 and a piston pipe 15. Piston pipe 15 is configured to move linearly with the spring brake piston 11 and transmit a braking force generated by the compression spring 6 towards the service portion.

The spring portion 1 further comprises a coupling 17 which is movable between a locking state (shown in Fig. 1) and a release state. In the locking state, the coupling 17 positively locks the spring brake piston 11 and the piston pipe 15 to one another such that force exerted by the compression spring 6 onto the spring brake piston 11 can be transferred via the piston pipe 15 to the service portion of the spring brake actuator.

The coupling 17 comprises a cam disc 19 and a number of locking elements 21 which are configured to be radially displaced by the cam disc upon a rotational movement of the cam disc 19.

At the center of the apparatus is a release rod 23 that is mating the couples to the cam disc 19 and axially fixed to the cylinder housing 3 in particular to the housing base 7 and preferably to the spring seat 5.

The release rod 23 is coupled with a nut 25 that is configured for rotating the release rod 23 upon application of torque thereto.

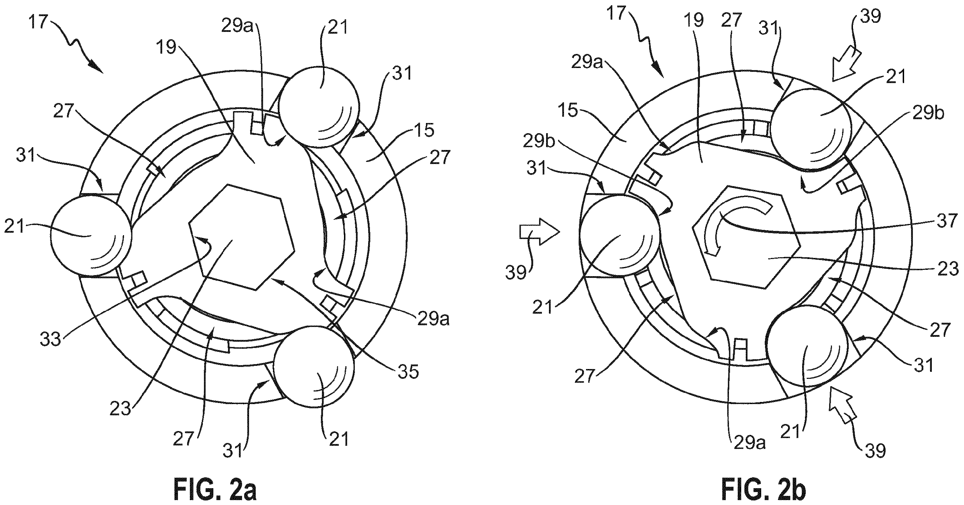

Fig. 2a, b show further details of the cam disc operation and the functioning principal of the coupling 17. The cam disc 19 comprises a number of recesses 27. Each recess 27 comprises a first end portion 29a and an oppositely located second end portion 29b. The depth of the recess 27 in the first end portion 29a is less than the depth of the recess 27 in the second end portion 29b. Preferably, a continuous base contour is provided in between the first and second end portion 29a, b in order to allow a smooth sliding movement of the locking elements 21 along the base of the recess 27 upon rotation of the cam disc 19.

Further preferred, each end portion 29a, b comprises a ratchet position to secure the locking element 21 in the respective end portion 29a, b. The ratchet position can be defined by an additional recess, preferably matingly corresponding to the shape of the locking element 21.

The cam disc 19 is positioned inside the piston pipe 15. Additionally, a number of passage openings 31 are provided for the locking elements 21 and allow a low friction sliding movement of the locking elements 21 through the passage openings 31.

The cam disc 19 is coupled to the release rod 23 in positively locking manner. Preferably, the release rod 23 comprises a torque-transmitting portion 33, in particular shaped as a polygonal portion, and the cam disc 19 comprises a matingly shaped recess 35 into which the release rod 23 is mounted. The cam disc 19 can preferably relatively move along the release rod 23.

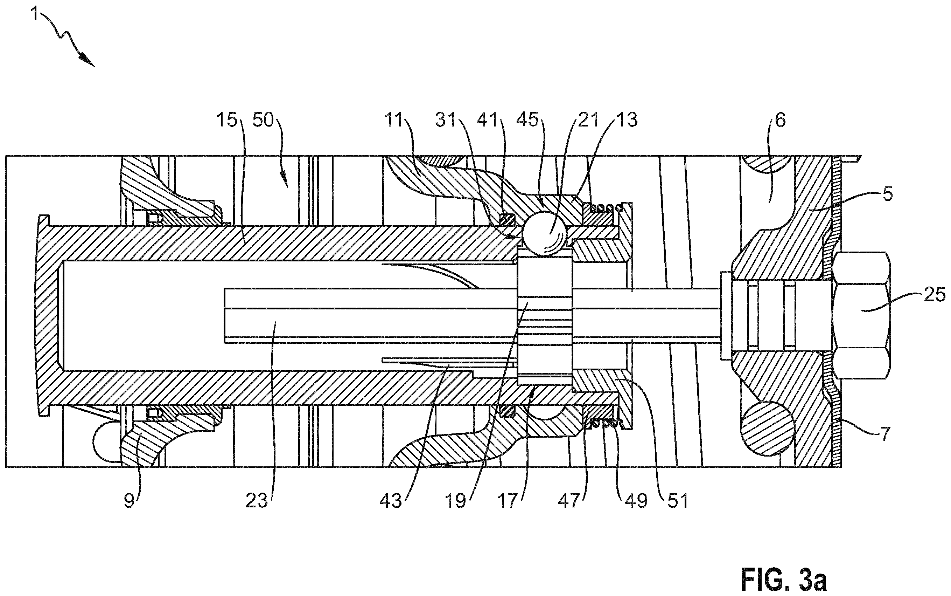

The coupling 17 is shown in Fig. 2a in the locking state. In the locking state, the locking element 21 extends radially outwards of the piston pipe 15 into a correspondingly shaped recess (45, cf. figs. 3a-c) in the sleeve 13 of the spring brake piston 11 (cf. Fig. 1). With the locking elements 21 in the state shown in Fig. 2a force transfer is enabled between the spring brake piston 11 and the piston pipe 15.

If the release rod 23 is, for example by applying torque to the nut 25, rotated in the direction of arrow 37 into the state shown in Fig. 2b, the locking elements 21 are pushed radially inwards by the sleeve 13, at the same time sliding along the base of the recesses 27 into the second end portions 29b. The radial inwards movement is indicated by arrows 39. In the state shown in Fig. 2b, the piston pipe 15 is uncoupled from the sleeve 13 and the spring brake piston 11 such that the piston pipe 15 may move relative to the spring brake piston 11. In other words, movement of the spring brake piston 11 as a function of the compression spring 6 does not force a movement of the piston pipe 15. In contrast, it is in the state shown in Fig. 2b possible to move the piston pipe 15 away from the spring brake piston towards a release position in which no breaking force is transmitted to the service portion of the spring brake actuator. Details of the movement of the inventive mechanism will be shown in the following Fig. 3a-c.

Fig. 3a shows a longitudinal cross sectional view of spring portion 1 shown in Fig. 1, with the coupling 17 in the locking state. In the depicted locking state, the locking elements 21 extend through passage openings 31 into the corresponding recess 45 of sleeve 13 and lock the piston pipe 15 to the spring brake piston 11.

In this configuration, a pressure drop in a pressure chamber 50 would cause the compression spring 6 to expand from the release position shown in Fig. 3a towards a braking position in which the piston pipe 15 moves to the left together with the spring brake piston 11 until it moves a push rod (not shown) of the service portion (not shown) far enough such that a connected braking system causes a braking function.

The piston pipe 15 and the sleeve 13 are sealed off against fluid leakage from the pressure chamber by one or more sealing elements 41. The cam disc 19 is biased toward the depicted locking state by a number elastically deformable members 43, for example torsion springs or the like.

Next to the sleeve 13, a support ring 47 is mounted onto the piston pipe 15 and configured for sliding along the piston pipe 15. The support ring 47 is biased towards the spring brake piston 11 by an elastically deformable member 49, for example a helical spring. On the rightmost end (in the orientation according to Fig. 3a) of the pipe piston 15 a stop shoulder 51 is mounted which supports the elastically deformable member 49. The stop shoulder 51 also axially fixes the cam disc 19 inside the piston pipe 15.

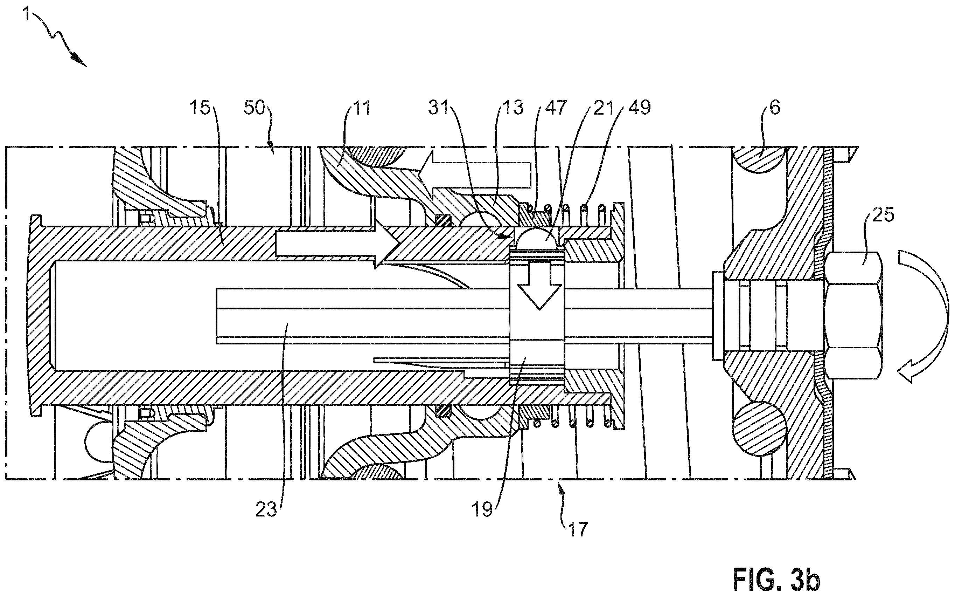

If the release rod 23 is rotated, for example such as shown in Fig. 2b, the locking elements 21 will move from the state shown in Fig. 3a to the state shown in Fig. 3b and retract into the passage openings 31 until the sleeve 13 and spring brake piston 11 is uncoupled from the piston pipe 15. Caused by the compression spring 6, the spring brake piston 11 slides to the left independently of the piston pipe 15. The support ring 47 in turn slides over the passage openings 31, actuated by the elastically deformable member 49 and prevents the locking elements 21 from dropping out of the passage openings 31. Since the piston pipe 15 is no longer coupled to the spring brake piston 11, reactionary forces of the braking system push out of the service portion (not shown) and automatically the piston pipe 15 in the opposite direction of the spring brake piston 11, thus releasing the brakes of the vehicle.

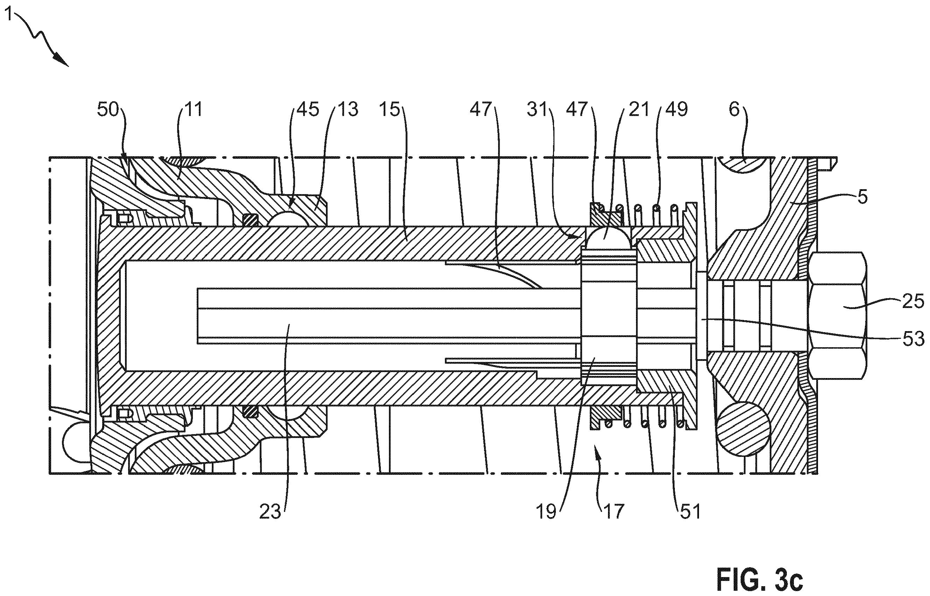

The movement indicated in 3b is continued until the spring brake piston 11 and the piston pipe 15 reach the positions shown in Fig. 3c. The spring brake piston 11 is moved to the left until it reaches an end position inside of the spring portion 1. The piston pipe in turn is moved all the way to the right until the stop shoulder 51 abuts essentially against the spring seat 5, or in this case against a step 53 on the release rod 23.

In order to restore the original configuration shown in Fig. 3a, the pressure chamber 50 is pressurized again. Due to an increase of pressure in pressure chamber 50, the spring brake piston 11 with its sleeve 13 slides to the right side (in the orientation according to Fig. 3a-c). Once the sleeve 13 contacts the support ring 47, the support ring 47 is pushed against the resilient force of the elastically deformable member 49 to the right past the passage openings 31. As soon as the recess 45 and the passage openings 31 are sufficiently flush, the cam disc 19 is returned towards the locking state by the elastically deformable members 47 which have biased the cam disc 19 towards the locking state. The locking elements 21 slide along the recesses 27 (Fig. 2a, b) and move through the passage openings 31 until they are in engagement with recess 45. Accordingly, the mechanism according to the invention and as shown in the preferred embodiment is self-locking.

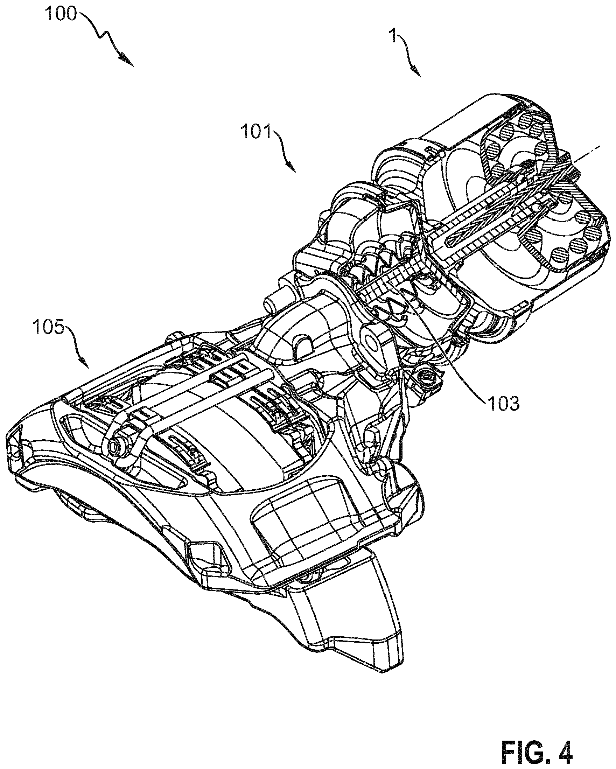

Figure 4 shows a spring brake actuator 100 mounted to a brake caliper 105 of a commercial vehicle.

The spring brake actuator 100 comprises a spring portion 1 that is formed in accordance with one of the preferred embodiments described hereinabove and shown in figures 1 through 3c. The spring portion 1 is coupled to a service portion 101. The service portion 101 comprises a push rod 103 movably mounted in the service portion 101 and configured to be coupled operatively to a brake caliper 105 of the commercial vehicle. The push rod 103 is acted upon by the piston pipe 15 of the spring portion or by a diaphragm that is pressure-operated, depending on which braking scenario is present.

The service portion 101 is operatively coupled to the brake caliper 105 in a generally known manner to provide the braking functionality to the vehicle.

### List of reference signs

- 1: spring portion
- 2: spring brake actuator
- 3: cylinder housing
- 5: spring seat
- 6: compression spring
- 7: housing base
- 9: connection flange
- 11: spring brake piston
- 13: sleeve
- 15: piston pipe
- 17: coupling
- 19: cam disc
- 21: locking elements
- 23: release rod
- 25: nut
- 27: recess
- 29a, b: end portion of recess
- 31: passage opening
- 33: polygonal portion
- 35: mating recess of cam disc 19
- 37: arrow
- 39: arrow
- 41: sealing
- 43: elastically deformable member for cam disc
- 45: recess for locking elements in sleeve 13
- 47: support ring
- 49: elastically deformable member for support ring
- 50: pressure chamber
- 51: stop shoulder
- 53: step

## Claims

1. A spring portion (1) of a spring brake actuator, in particular parking or emergency spring brake actuator, for use in a commercial vehicle, said spring portion (1) being configured to be coupled to a service brake portion of the spring brake actuator, and comprising
- a spring brake piston (11) configured to move between a release position and a braking position;
- a compression spring (6) that is operatively coupled to the spring brake piston (11) and effective to push the spring brake piston (11) towards the braking position, generating a braking force;
- the spring brake piston (11) comprising a piston pipe (15) that is configured to transfer the braking force to the service brake portion;
- a coupling (17) that is interposed between the piston pipe (15) and the spring brake piston (11) and configured to move between a locking state and a release state,
couple the piston pipe (15) to the spring brake piston (11) when in the locking state, and
uncouple the piston pipe (15) and the spring brake piston (11) when in the release state;
wherein a rotatable release rod (23) is operatively coupled to the coupling (17) such that a rotation of the release rod (23) causes the coupling (17) to move between the locking state and the release state, **characterized in that** the coupling (17) comprises a number of locking elements (21) that are radially movably mounted inside the spring portion (1) and configured to positively lock the piston pipe (15) and the spring brake piston (11) when in the locking state,
wherein the spring brake piston (11) comprises a sleeve (13) that is configured to slidably hold the piston pipe (15), wherein the sleeve (13) comprises at least one recess (45) that is configured to receive the locking elements (21) in the locking state, wherein the coupling (17) comprises a support ring (47) that is slidably mounted on the piston pipe (15) adjacent to the sleeve, and an elastically deformable member (49) that is operatively coupled to the support ring (47) and effective to bias the support ring (47) towards the sleeve.

2. The spring portion of claim 1,
wherein the coupling (17) comprises a cam disc (19) that is mounted to the release rod (23) and slidingly engages the locking elements (21) such that the locking elements (21) extend radially further outwards in the locking state than in the release state.

3. The spring portion (1) of claim 2,
wherein the cam disc (19) comprises for each locking element (21) a recess (27) into which the respective locking element (21) extends, each recess extending in a circumferential direction of the cam disc (19), having a contour that is configured to slidingly displace the locking elements (21) radially outwards when the release rod (23) is rotated from the release state towards the locking state.

4. The spring portion (1) of claim 3,
wherein the coupling (17) comprises at least one elastically deformable member (43) that is operatively coupled to the cam disc (19) and effective to bias the cam disc (19) towards the locking position.

5. The spring portion (1) of any one of the preceding claims,
wherein the release rod (23) and the cam disc (19) are located inside the piston pipe (15), the piston pipe (15) comprises for each locking element (21) a passage opening (31), and the locking elements (21) are configured to slidingly move in the passage openings (31) for locking the spring brake piston (11) in the locking state, and unlocking the spring brake piston (11) in the release state.

6. The spring portion (1) of any one of the preceding claims,
wherein the at least one recess (45) in the sleeve has a contour that is configured to slidingly displace the locking elements (21) radially inwards when the release rod (23) is rotated from the locking state towards the release state and the compression spring (6) pushes the spring brake piston (11) towards the braking position.

7. The spring portion (1) of any one of the preceding claims,
wherein the number of locking elements (21) is at least two, and an angle of rotation of the release rod between the locking state and the release state is less than 180°, and preferably, the number of locking elements (21) is at least three and the angle of rotation is less than 120°, particularly preferred less than 90°.

8. The spring portion (1) of any one of the preceding claims, wherein the locking elements (21) are formed as balls, pins, wedges or a mixture thereof.

9. The spring portion (1) of any one of the preceding claims,
wherein the release rod (23) comprises a torque-transmitting portion (33), and the cam disc comprises a matingly shaped recess (35) into which the polygonally shaped portion (33) of the release rod (23) extends.

10. A spring brake actuator (100), in particular parking or emergency spring brake actuator, for use in a commercial vehicle, having a spring portion (1), a service portion (101) that is coupled to the spring portion (1) and comprises a push rod (103) that is movably mounted in the service portion (101) and configured to be coupled to a brake caliper (105) of the commercial vehicle, **characterized in that** the spring portion (1) is formed according to any one of the preceding claims.

11. A vehicle, in particular commercial vehicle, having at least one wheel, at least one spring brake actuator configured to generate a braking force and at least one brake caliper configured to apply the braking force generated by the spring brake actuator to the wheel,
**characterized in that** the spring brake actuator is formed according to claim 10.

## Patentansprüche

1. Federabschnitt (1) eines Federspeicherbremszylinders, insbesondere eines Feststell- oder Notbremsenfederspeicherbremszylinders, zur Verwendung in einem Nutzfahrzeug, wobei der Federabschnitt (1) dazu ausgelegt ist, mit einem Betriebsbremsenabschnitt des Federspeicherbremszylinders gekoppelt zu werden, und Folgendes umfassend:
- einen Federspeicherbremskolben (11), der dazu ausgelegt ist, sich zwischen einer Entriegelungsstellung und einer Bremsstellung zu bewegen;
- eine Druckfeder (6), die mit dem Federspeicherbremskolben (11) wirkverbunden und wirksam ist, den Federspeicherbremskolben (11) in die Bremsstellung zu drücken, wodurch eine Bremskraft erzeugt wird;
- wobei der Federspeicherbremskolben (11) ein Kolbenrohr (15) umfasst, das dazu ausgelegt ist, die Bremskraft auf den Betriebsbremsenabschnitt zu übertragen;
- eine Kupplung (17), die zwischen dem Kolbenrohr (15) und dem Federspeicherbremskolben (11) angeordnet und dazu ausgelegt ist,
sich zwischen einem Verriegelungszustand und einem Entriegelungszustand zu bewegen,
das Kolbenrohr (15) im Verriegelungszustand mit dem Federspeicherbremskolben (11) zu koppeln und
das Kolbenrohr (15) im Entriegelungszustand vom Federspeicherbremskolben (11) zu entkoppeln;
wobei eine drehbare Entriegelungsstange (23) mit der Kupplung (17) wirkverbunden ist, sodass eine Drehung der Entriegelungsstange (23) bewirkt, dass sich die Kupplung (17) zwischen dem Verriegelungszustand und dem Entriegelungszustand bewegt,
**dadurch gekennzeichnet, dass** die Kupplung (17) mehrere Verriegelungselemente (21) umfasst, die radial beweglich innerhalb des Federabschnitts (1) montiert und dazu ausgelegt sind, das Kolbenrohr (15) und den Federspeicherbremskolben (11) im Verriegelungszustand formschlüssig zu verriegeln,
wobei der Federspeicherbremskolben (11) eine Muffe (13) umfasst, die dazu ausgelegt ist, das Kolbenrohr (15) verschiebbar zu halten, wobei die Muffe (13) mindestens eine Aussparung (45) umfasst, die dazu ausgelegt ist, die Verriegelungselemente (21) im Verriegelungszustand aufzunehmen, wobei die Kupplung (17) einen Stützring (47), der verschiebbar auf dem Kolbenrohr (15) an die Muffe angrenzend montiert ist, und ein elastisch verformbares Element (49), das mit dem Stützring (47) wirkverbunden und dazu funktionsfähig ist, den Stützring (47) zur Muffe hin vorzuspannen, umfasst.

2. Federabschnitt nach Anspruch 1,
wobei die Kupplung (17) eine Nockenscheibe (19) umfasst, die an der Entriegelungsstange (23) montiert ist und verschiebbar in die Verriegelungselemente (21) eingreift, sodass sich die Verriegelungselemente (21) im Verriegelungszustand radial weiter nach außen erstrecken als im Entriegelungszustand.

3. Federabschnitt (1) nach Anspruch 2,
wobei die Nockenscheibe (19) für jedes Verriegelungselement (21) eine Aussparung (27) umfasst, in die sich das jeweilige Verriegelungselement (21) erstreckt, wobei sich jede Aussparung in eine Umfangsrichtung der Nockenscheibe (19) erstreckt, die eine Kontur aufweist, die dazu ausgelegt ist, die Verriegelungselemente (21) radial nach außen verschiebbar zu versetzen, wenn die Entriegelungsstange (23) vom Entriegelungszustand in den Verriegelungszustand gedreht wird.

4. Federabschnitt (1) nach Anspruch 3,
wobei die Kupplung (17) mindestens ein elastisch verformbares Element (43) umfasst, das mit der Nockenscheibe (19) wirkverbunden und dazu funktionsfähig ist, die Nockenscheibe (19) in die Verriegelungsstellung vorzuspannen.

5. Federabschnitt (1) nach einem der vorstehenden Ansprüche,
wobei sich die Entriegelungsstange (23) und die Nockenscheibe (19) innerhalb des Kolbenrohrs (15) befinden, wobei das Kolbenrohr (15) für jedes Verriegelungselement (21) eine Durchgangsöffnung (31) umfasst und die Verriegelungselemente (21) dazu ausgelegt sind, sich in den Durchgangsöffnungen (31) zum Verriegeln des Federspeicherbremskolbens (11) im Verriegelungszustand und zum Entriegeln des Federspeicherbremskolbens (11) im Entriegelungszustand verschiebbar zu bewegen.

6. Federabschnitt (1) nach einem der vorstehenden Ansprüche,
wobei die mindestens eine Aussparung (45) in der Muffe eine Kontur aufweist, die dazu ausgelegt ist, die Verriegelungselemente (21) radial nach innen verschiebbar zu versetzen, wenn die Entriegelungsstange (23) vom Verriegelungszustand in den Entriegelungszustand gedreht wird und die Druckfeder (6) den Federspeicherbremskolben (11) in die Bremsstellung drückt.

7. Federabschnitt (1) nach einem der vorstehenden Ansprüche,
wobei die Anzahl der Verriegelungselemente (21) mindestens zwei ist und der Drehwinkel der Entriegelungsstange zwischen dem Verriegelungszustand und dem Entriegelungszustand kleiner als 180° ist und vorzugsweise die Anzahl der Verriegelungselemente (21) mindestens drei ist und der Drehwinkel kleiner als 120° ist, besonders bevorzugt kleiner als 90° ist.

8. Federabschnitt (1) nach einem der vorstehenden Ansprüche, wobei die Verriegelungselemente (21) als Kugeln, Stifte, Keile oder eine Kombination davon ausgebildet sind.

9. Federabschnitt (1) nach einem der vorstehenden Ansprüche,
wobei die Entriegelungsstange (23) einen Drehmomentübertragungsabschnitt (33) umfasst und die Nockenscheibe eine passend geformte Aussparung (35) umfasst, in die sich der vieleckige Abschnitt (33) der Entriegelungsstange (23) erstreckt.

10. Federspeicherbremszylinder (100), insbesondere ein Feststell- oder Notbremsenfederspeicherbremszylinder, zur Verwendung in einem Nutzfahrzeug, der einen Federabschnitt (1), einen Betriebsabschnitt (101), der mit dem Federabschnitt (1) gekoppelt ist und eine Schubstange (103) umfasst, die beweglich im Betriebsabschnitt (101) montiert und dazu ausgelegt ist, mit einem Bremssattel (105) des Nutzfahrzeugs gekoppelt zu werden, aufweist, **dadurch gekennzeichnet, dass** der Federabschnitt (1) nach einem der vorstehenden Ansprüche ausgebildet ist.

11. Fahrzeug, insbesondere ein Nutzfahrzeug, das mindestens ein Rad, mindestens einen Federspeicherbremszylinder, der dazu ausgelegt ist, eine Bremskraft zu erzeugen, und mindestens einen Bremssattel, der dazu ausgelegt ist, die vom Federspeicherbremszylinder erzeugte Bremskraft auf das Rad aufzubringen, aufweist,
**dadurch gekennzeichnet, dass** der Federspeicherbremszylinder nach Anspruch 10 ausgebildet ist.

## Revendications

1. Partie ressort (1) d'un actionneur de frein à ressort, plus particulièrement d'un actionneur de frein à ressort de stationnement ou de secours, destiné à être utilisé dans un véhicule commercial, ladite partie ressort (1) étant configurée pour être accouplée à une partie frein de service de l'actionneur de frein à ressort, et comprenant
- un piston (11) de frein à ressort configuré pour se déplacer entre une position de relâchement et une position de freinage ;
- un ressort de compression (6) qui est accouplé fonctionnellement au piston (11) de frein à ressort et a pour fonction de pousser le piston (11) de frein à ressort vers la position de freinage, en produisant une force de freinage ;
- le piston (11) de frein à ressort comprenant un conduit (15) de piston qui est configuré pour transférer la force de freinage à la partie frein de service ;
- un accouplement (17) qui est interposé entre le conduit (15) de piston et le piston (11) de frein à ressort et configuré pour
se déplacer entre un état de verrouillage et un état de déblocage,
accoupler le conduit (15) de piston et le piston (11) de frein à ressort lorsqu'il occupe l'état de verrouillage, et
désaccoupler le conduit (15) de piston et le piston (11) de frein à ressort lorsqu'il occupe l'état de déblocage ;
une tige de déblocage rotative (23) étant accouplée fonctionnellement à l'accouplement (17) de telle sorte qu'une rotation de la tige de déblocage (23) provoque le déplacement de l'accouplement (17) entre l'état de verrouillage et l'état de déblocage,
**caractérisée en ce que** l'accouplement (17) comprend un certain nombre d'éléments de verrouillage (21) qui sont montés radialement mobiles à l'intérieur de la partie ressort (1) et configurés pour verrouiller positivement le conduit (15) de piston et le piston (11) de frein à ressort lorsqu'il occupe l'état de verrouillage,
le piston (11) de frein à ressort comprenant un manchon (13) qui est configuré pour maintenir de manière coulissante le conduit (15) de piston, le manchon (13) comprenant au moins un renfoncement (45) qui est configuré pour recevoir les éléments de verrouillage (21) dans l'état de verrouillage, l'accouplement (17) comprenant une bague de support (47) qui est montée de manière coulissante sur le conduit (15) de piston adjacente au manchon, et un organe déformable élastiquement (49) qui est accouplé fonctionnellement à la bague de support (47) et a pour fonction de solliciter la bague de support (47) vers le manchon.

2. Partie ressort selon la revendication 1,
dans laquelle l'accouplement (17) comprend un disque à cames (19) qui est monté sur la tige de déblocage (23) et coopère de manière coulissante avec les éléments de verrouillage (21) de telle sorte que les éléments de verrouillage (21) s'étendent radialement plus loin vers l'extérieur dans l'état de verrouillage que dans l'état de déblocage.

3. Partie ressort (1) selon la revendication 2,
dans laquelle le disque à cames (19) comprend, pour chaque élément de verrouillage (21), un renfoncement (27) dans lequel s'étend l'élément de verrouillage (21) respectif, chaque renfoncement s'étendant dans une direction circonférentielle du disque à cames (19), en présentant un contour qui est configuré pour déplacer de manière coulissante les éléments de verrouillage (21) radialement vers l'extérieur lorsque la tige de déblocage (23) est entraînée en rotation de l'état de déblocage vers l'état de verrouillage.

4. Partie ressort (1) selon la revendication 3,
dans laquelle l'accouplement (17) comprend au moins un organe déformable élastiquement (43) qui est accouplé fonctionnellement au disque à cames (19) et a pour fonction de solliciter le disque à cames (19) vers la position de verrouillage.

5. Partie ressort (1) selon l'une quelconque des revendications précédentes,
dans laquelle la tige de déblocage (23) et le disque à cames (19) se situent à l'intérieur du conduit (15) de piston, le conduit (15) de piston comprend, pour chaque élément de verrouillage (21), une ouverture de passage (31), et les éléments de verrouillage (21) sont configurés pour se déplacer de manière coulissante dans les ouvertures de passage (31) pour verrouiller le piston (11) de frein à ressort dans l'état de verrouillage, et déverrouiller le piston (11) de frein à ressort dans l'état de déblocage.

6. Partie ressort (1) selon l'une quelconque des revendications précédentes,
dans laquelle l'au moins un renfoncement (45) dans le manchon présente un contour qui est configuré pour déplacer de manière coulissante les éléments de verrouillage (21) radialement vers l'intérieur lorsque la tige de déblocage (23) effectue une rotation de l'état de verrouillage vers l'état de déblocage et le ressort de compression (6) pousse le piston (11) de frein à ressort vers la position de freinage.

7. Partie ressort (1) selon l'une quelconque des revendications précédentes,
dans laquelle le nombre d'éléments de verrouillage (21) est d'au moins deux et un angle de rotation de la tige de déblocage entre l'état de verrouillage et l'état de déblocage est inférieur à 180° et, de préférence, le nombre d'éléments de verrouillage (21) est d'au moins trois et l'angle de rotation est inférieur à 120°, de préférence encore inférieur à 90°.

8. Partie ressort (1) selon l'une quelconque des revendications précédentes, dans laquelle les éléments de verrouillage (21) prennent la forme de billes, de broches, de cales ou d'un mélange de ceux-ci.

9. Partie ressort (1) selon l'une quelconque des revendications précédentes,
dans laquelle la tige de déblocage (23) comprend une partie de transmission de couple (33), et le disque à cames comprend un renfoncement de forme conjuguée (35) dans lequel s'étend la partie de forme polygonale (33) de la tige de déblocage (23).

10. Actionneur (100) de frein à ressort, plus particulièrement actionneur de frein à ressort de stationnement ou de secours, destiné à être utilisé dans un véhicule commercial, pourvu d'une partie ressort (1), d'une partie de service (101) qui est accouplée à la partie ressort (1) et comprend une tige-poussoir (103) qui est montée mobile dans la partie de service (101) et est configurée pour être accouplée à un étrier (105) de frein du véhicule commercial, **caractérisé en ce que** la partie ressort (1) est formée selon l'une quelconque des revendications précédentes.

11. Véhicule, plus particulièrement véhicule commercial, pourvu d'au moins une roue, d'au moins un actionneur de frein à ressort configuré pour produire une force de freinage et d'au moins un étrier de frein configuré pour appliquer la force de freinage produite par l'actionneur de frein à ressort à la roue,
**caractérisé en ce que** l'actionneur de frein à ressort est formé selon la revendication 10.
